# EUROPEAN PATENT SPECIFICATION

(11) **EP 2 632 095 B1**
(45) Date of publication and mention of the grant of the patent: **27.04.2016**
(21) Application number: 12189731.8
(22) Date of filing: 24.10.2012
(51) Int. Cl.: H04L 12/58, H04M 1/2745, H04M 1/725

(54) **Retrieval and presentation of contact data at an electronic device**
Abruf und Präsentation von Kontaktdaten an einer elektronischen Vorrichtung
Extraction et présentation de données de contact au niveau d'un dispositif électronique

(30) Priority: 24.02.2012 US 201261603142 P
(43) Date of publication of application: 28.08.2013
(73) Proprietor: BlackBerry Limited, Waterloo, ON N2K 0A7 (CA)
(72) Inventor: Wells, Michael Edward Henry, 211 40 Malmö (SE); Johansson, Karl-Anders Reinhold, 211 30 Malmö (SE)
(74) Representative: Moore, Barry

(56) References cited:
- EP-A1- 1 367 522
- WO-A2-2007/134302
- US-A- 5 923 848
- US-A1- 2007 280 179

## Description

### Cross-Reference to Related Applications

This application claims priority to United States Provisional Application No. 61/603,142 filed 24 February 2012.

### Technical Field

The present disclosure relates to identification and retrieval of contact data at an electronic device for presentation by an electronic device.

### Technical Background

Electronic devices, such as wireless communication devices, are typically provided with messaging applications for composing, sending and receiving messages such as email (electronic mail), instant messages (IM), short message service (SMS) multimedia messaging service (MMS) and the like. Messages to be sent from an electronic device are typically addressed to one or more recipients (who may also be referred to as "addressees") either automatically by the device, or manually by the electronic device user. The identification of the recipient(s) may be implicit depending on the operation of the messaging application. For example, in a chat context (such as that employed by typical IM messaging applications), the user is not necessarily required to explicitly identify the recipient(s) when participating in an ongoing conversation by composing and sending a message; any recipients are already associated with the conversation and/or the set of messages within that conversation. In other contexts, the user may be required to select the recipient(s) at some point prior to sending the message, for example by expressly adding the recipient(s) to an address entry field during the message composition stage, or by expressly or implicitly confirming the automated insertion of recipients in the address entry field by the messaging application.

WO2007134302 (A2) discloses that an input is received for an address field of a message that is to be transmitted from a messaging application. A contact record is associated from the input with the message. A recipient address is selected from the identified contact record for use as an address field value. An input is detected from the user, and subsequently, the user is enabled to edit the address field value. In one embodiment, the user is enabled to edit the address field value by either allowing the user to select a new recipient address from the identified contact record, or by allowing the user to create an alternative recipient address that is not part of the contact record.

EP1367522 (A1) discloses an email gateway extension is provided which assists in the resolution of email addresses. The system uses name matching and heuristic techniques in an attempt to resolve email addresses. The system incorporates a secondary look-up table to identify equivalents of correct email recipient addresses, and heuristic matching methods to resolve addresses according to phonetic name matching techniques and typing error compensation.

### Summary

The present teaching provides a method as detailed in claim 1, an electronic device according to claim 13, and a computer readable medium according to claim 14. Advantageous features are provided in dependent claims.

### Brief Description of the Drawings

In drawings which illustrate by way of example only embodiments of the present disclosure, in which like reference numerals describe similar items throughout the various figures,
FIG. 1 is a block diagram of an example of an electronic device.
FIG. 2 is a schematic diagram of an example network for use in communicating with the electronic device of FIG. 1.
FIGS. 3A to 3D are illustrations of example message composition screens in which one or more recipients may be added to a message being composed, that may be displayed by the electronic device of FIG. 1.
FIG. 4 is illustration of a further example message composition screen including a display of a suggested recipient.
FIG. 5 is an illustration of another example message composition screen including display of suggested recipients.
FIGS. 6A and 6B are illustrations of other example message composition screens including display of further suggested recipients.
FIGS. 7A and 7B are further illustrations of example message composition screens including display of suggested recipients as an input string is updated.
FIGS. 8A and 8B are illustrations of other example message composition screens including display of suggested recipients for indirect addressees of a message.
FIGS. 9A to 9C are illustrations of still other example message composition screens.
FIG. 10 is an illustration of another message composition screen.
FIG. 11 is a flowchart illustrating a possible method for retrieving and displaying suggested recipient identifier entries implementable at the electronic device of FIG. 1.
FIG. 12 is a flowchart illustrating a possible method detailing the retrieval of recipient identifiers shown in FIG. 11.

### Detailed Description of the Embodiments

The embodiments and examples herein provide enhanced message addressing methods, devices and systems for electronic communications such as email and other message formats in which one or more addressees are selected by a user. These embodiments will be described and illustrated primarily in relation to electronic devices, such as tablet computers, smartphones, or any other portable electronic device, which may or may not be equipped to communicate over wireless networks or public networks. It will be appreciated by those skilled in the art, however, that this description is not intended to limit the scope of the described embodiments to implementation on these particular systems. For example, the methods and systems described herein may be applied to any appropriate communication device or data processing device adapted for composition and addressing of messages or the selection of one or more users, recipients, or other delegates, whether or not the device is portable or wirelessly enabled, whether or not it is provided with voice communication capabilities. Additionally or alternatively the device may be adapted to process data and carry out operations on data in response to user commands for any number of purposes, including productivity and entertainment. Thus, the embodiments described herein may be implemented on electronic devices adapted for communication or messaging, including without limitation cellular phones, smartphones, wireless organizers, personal digital assistants, desktop computers, terminals, laptops, tablets, handheld wireless communication devices, notebook computers, portable gaming devices, Internet-connected televisions, set-top boxes, digital picture frames, digital cameras, in-vehicle entertainment systems, entertainment devices such as MP3 or video players, and the like. As expressed in the various examples herein, the electronic device may have an integrated display interface; however, the examples need not be limited to such embodiments. The electronic device may be configured to output data to be painted to an external display unit such as an external monitor or panel, television screen, projector, or virtual retinal display (via a data port or transmitter, such as a Bluetooth® transceiver, USB port, HDMI port, DVI port, and the like). References herein to a "display," "display screen" or "display interface" are intended to encompass both integrated and external display units.

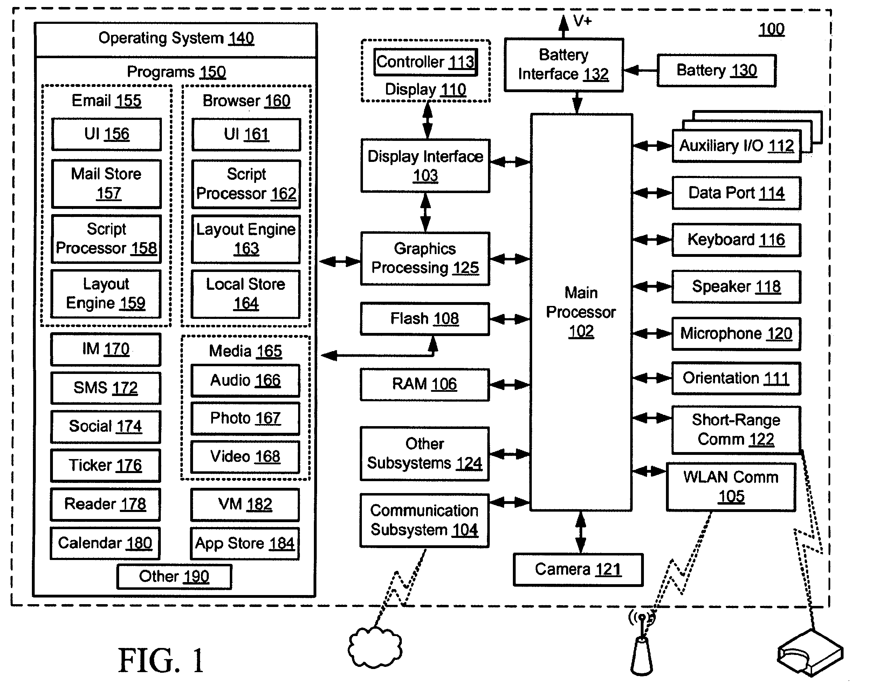

FIG. 1 is a block diagram of an example of an electronic device 100 that may be used with the embodiments and examples described herein. The electronic device 100 includes a number of components such as a main processor 102 that controls the overall operation of the electronic device 100. It should be understood that the components described in FIG. 1 are optional and that an electronic device used with various embodiments described herein may include or omit components described in relation to FIG. 1.

The electronic device 100 may be a battery-powered device including a battery interface 132 for receiving one or more rechargeable batteries 130. Communication functions, including data and voice communications, are performed through one or more communication subsystems 104, 105, and/or 122 in communication with the processor 102. Data received by the electronic device 100 can be decompressed and decrypted by a decoder operating according to any suitable decompression techniques, and encryption/decryption techniques according to one or more various encryption or compression standards known to persons of skill in the art.

If equipped with a communication subsystem 104, this subsystem 104 receives data from and sends data to wireless network 200. In this embodiment of the electronic device 100, the communication subsystem 104 is configured in accordance with one or more wireless communications standards. New wireless communications standards are still being defined, but it is believed that they will have similarities to the network behaviour described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for the wireless communications standard, and optionally other network communications.

The electronic device 100 may be provided with other communication subsystems, such as a wireless LAN (WLAN) communication subsystem 105 or a short-range and/or near-field communications subsystem 122 also shown in FIG. 1. The WLAN communication subsystem 105 may operate in accordance with a known network protocol such as one or more of the 802.11™ family of standards developed or maintained by IEEE. The communications subsystems 105 and 122 provide for communication between the electronic device 100 and different systems or devices without the use of the wireless network 200, over varying distances that may be less than the distance over which the communication subsystem 104 can communicate with the wireless network 200. The subsystem 122 can include an infrared device and associated circuits and/or other components for short-range or near-field communication.

It should be understood that any of the communication subsystems 104, 105, 122 may optionally be included in the electronic device 100. Alternatively, a communication subsystem provided in a dongle or other peripheral device (not shown) may be connected to the electronic device 100, either wirelessly or by a fixed connection such as a USB port, to provide the electronic device 100 with access to a network. If provided onboard the electronic device 100, the communication subsystems 104, 105 and 122 may be separate from, or integrated with, each other.

The main processor 102 also interacts with additional subsystems, if present, such as a Random Access Memory (RAM) 106, a flash memory 108, a display 110, other data and memory access interfaces such as an auxiliary input/output (I/O) subsystem 112 or a data port 114, a keyboard 116, a speaker 118, a microphone 120, a camera 121, the communications 104, 105, 122 and other device subsystems 124. The auxiliary subsystem 112 can include devices such as a mouse, trackball, infrared fingerprint detector, or a roller wheel with dynamic button pressing capability, optical joystick, trackpad, or other user input device. The electronic device may also be provided with an orientation sensor or module 111, used to detect the orientation of the display 110. In the case of a portable (such as a handheld) electronic device 100, display 110 is typically integrated with the device 100, as well as the orientation module 111. In the case of an electronic device 100 where the display 110 is external to the device, the orientation module 111 may be integrated with the external display screen. The orientation module 111 may include any suitable module that may be selected by those skilled in the art, such as an accelerometer which may be used to detect gravity- or motion-induced forces and their direction. For example, the orientation module can have a digital three-axis accelerometer connected to an interrupt and serial interface of the processor 102, or another microcontroller of the device 100 (not shown). The processor 102 or microcontroller determines the device 100 orientation in accordance with acceleration measured by the accelerometer and provides the detected orientation to the operating system, or raw acceleration data measured by the accelerometer can be sent to the processor 102 so that device orientation is determined by the operating system of the electronic device 100. The orientation module 111 may thus be considered to include the accelerometer, microcontroller or those modules of the processor 102 executing to determine orientation. It should be understood that the orientation module 111 may optionally be present at an external display, and provide orientation determination for the display screen associated with the electronic device 100. Whether the orientation module 111 is located at an external display or is located at the electronic device 100 having an integrated display, the orientation determined by the orientation module 111 is related to the orientation of the display screen associated with the mobile device.

The orientation or acceleration detected at the electronic device 100 (or at the external display 110) may be processed to determine a response of the electronic device 100, such as an orientation of a graphical user interface displayed on the display 110 in response to a determination of the current orientation detected. Upon determination of the current orientation or a change in orientation, the operating system may issue notifications to executing applications of the current orientation. Individual applications may register a device orientation event notification listener with the operating system to receive such notifications. Alternatively, applications may query the operating system for the current orientation at defined intervals.

In some embodiments, the electronic device 100 may be a touchscreen-based device, in which the display interface 110 is a touchscreen interface that provides both a display for communicating information and presenting graphical user interfaces, as well as an input subsystem for detecting user input that may be converted to instructions for execution by the device 100. The touchscreen display interface 110 may be the principal user interface provided on the electronic device 100, although in some embodiments, additional buttons, variously shown in the figures or a trackpad, or other input means may be provided. If a touchscreen display interface 110 is provided, then other user input means such as the keyboard 116 may or may not be present. The controller 216 and/or the processor 102 may detect a touch by any suitable contact member on the touch-sensitive display 110.

A visualization processor or module 125 may be included in the electronic device 100. The visualization module 125 analyzes and processes data for visualization on the display 110. Data originally prepared for visualization on a large-screen display may require additional processing prior to visualization on a small-screen display. This additional processing may be accomplished by the visualization module 125. As will be appreciated by those of skill in the art, the visualization module can be implemented in hardware, software, or a combination thereof, and can include a dedicated image processor and associated circuitry, or can be implemented within main processor 102. In some electronic devices 100, particularly those provided with integrated displays 100 (although as noted above, the embodiments herein are not necessarily restricted to only such devices), the processor 102, visualization module 125, and other components are configured to respond to detected changes in orientation of the device 100.

The electronic device 100 also includes an operating system 140 and software components 155 to 190, collectively indicated as programs 150 in FIG. 1. The operating system 140 and the software components 155 to 190 that are executed by the main processor 102 are typically stored in a persistent store such as the flash memory 108, which can alternatively be a read-only memory (ROM) or similar storage element (not shown). Those skilled in the art will appreciate that portions of the operating system 140 and the software components 155 to 184, such as specific device applications, or parts thereof, can be temporarily loaded into a volatile store such as the RAM 106. Other software components 190 besides those explicitly illustrated in FIG. 1 can also be included, as is well known to those skilled in the art.

Software applications may be installed on the electronic device 100 during its manufacture (for example, during initial loading of the operating system 140), or at a subsequent time once the electronic device 100 is delivered to the user. These software applications may be supplied by the electronic device manufacturer or operating system provider, or may be third party applications. The additional applications can be loaded onto the electronic device 100 through at least one of the communications subsystems 104, 105, 122, the auxiliary I/O subsystem 112, the data port 114, or any other suitable device subsystem 124. This flexibility in application installation increases the functionality of the electronic device 100 and can provide enhanced on-device functions, communication-related functions, or both.

The various applications that may be installed on the electronic device 100 include messaging applications, such as the email messaging application 155, instant messaging (IM) application 170, and short message service (SMS) service 172. Various alternatives exist for message applications, as is well known to those skilled in the art. Messages that have been sent or received by the user are typically stored in the flash memory 108 of the electronic device 100 or some other suitable storage element in the electronic device 100. Each message type may have a distinct message store in the device memory. In at least some embodiments, some of the sent and received messages can be stored remotely from the device 100 such as in a data store of an associated host system with which the electronic device 100 communicates. There may be multiple ones of these applications installed on the electronic device 100; for example, a distinct application may be used for each different account provisioned on the electronic device 100, even if the message types associated with those accounts are the same. Other types of messaging applications may be included on the electronic device 100, and other ones of the depicted applications may also provide access to a form of messaging service, such as social networking applications 172. Social networking applications and others are generally configured to receive or retrieve data over a network for presentation to the user, such as the browser application 160, ticker application 176, and reader application 178. The browser application 160 may also be used to access a message service provided over the network.

Other types of software applications can also be installed on the electronic device 100, such as calendar applications 180, media applications 165 for processing and presenting audio files 166, photos and other graphic files 167, and videos 168. One or more virtual machines 182 may be provided on the electronic device 100 for executing applications requiring a runtime environment other than that provided by the operating system 140. A further application 184 may provide access over a network to a vendor site offering software applications for download (and optionally for purchase) to the electronic device 100.

In use, a received signal such as a text message, an email message, or webpage download will be processed by the receiving communication subsystem 104, 105, 122 and input to the main processor 102. The main processor 102 will then process the received signal for output to the display 110 or alternatively to the auxiliary I/O subsystem 112. A subscriber can also compose data items, such as email messages, for transmission over a network.

The communication subsystems 104, 105, 122 may include a receiver, transmitter, and associated components such as one or more embedded or internal antenna elements, Local Oscillators (LOs), and a processing module such as a Digital Signal Processor (DSP) in communication with the transmitter and receiver. The particular design of the communication subsystems 104, 105, 122, or other communication subsystem is dependent upon the communication network with which the electronic device 100 is intended to operate. Thus, it should be understood that the foregoing description serves only as one example.

Text-based content that is rendered for display may be obtained from a document such as a message, word processor document, webpage, or similar file, which is either obtained from memory at the device such as flash memory 108 or RAM 106, or obtained over a network connection. A suitable application, such as a messaging application, viewer application, or browser application, can process and render the document for display in accordance with any formatting or stylistic directives included with the document. FIG. 1 also illustrates possible principal components of the email messaging application 155 and browser application 160. The email message application may include a user interface module 156 for rendering user interface elements for use in display screens of the messaging application; a message data store or mail store 157 (this is considered to form part of the application 155 to the extent that it interoperates with the various application components and may be comprised in application memory, although in practice the mail store 157 may be located in memory 108 in the device 100 in a location distinct from the messaging application code itself); a script processor, plug-in, or virtual machine 158 for executing code snippets, scripts and the like embedded in, received with, or invoked by the message being processed by the application; and a layout engine 159 for generating a rendered version of email messages for output to the display 110.

The browser application 160 includes a user interface engine 161, layout or rendering engine 163, a script processor, plug-in, or virtual machine 162 for executing code snippets, scripts and the like embedded in, received with, or invoked by the webpage being processed. The browser application 160 may also have its own local store 164, allocated to the application from the volatile and/or non-volatile memory 106, 108 of the electronic device 100. In some cases, messaging applications such as the email messaging application 155 are not provided with their own script processors 158 and/or layout engines 159; instead, the processing and layout functionality of the analogous components of the browser application 160 are used. This is particularly the case where the email messaging application 155 and the browser application 160 are provided by the same developer or publisher.

When a document such as a message or webpage is received or retrieved for processing and display, it is processed by the appropriate layout engine, with any scripts embedded in or provided with the document passed to the script processor for execution. The layout engine parses the document to generate a rendered version for output at the display 110. The rendered output may be provided to the visualization module and thence to the display 110.

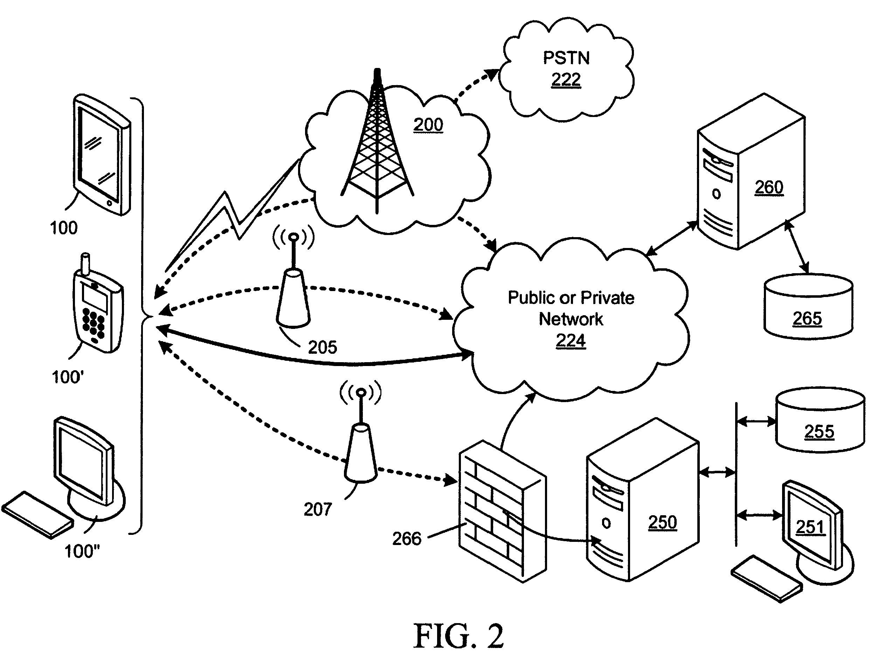

FIG. 2 illustrates an example of a possible network topology that may be used with the example electronic device 100. It will be understood by those skilled in the art that the schematic of FIG. 2 is merely representative of only particular aspects of a network, and omits other components that are typically included for ease of exposition, such as peripheral devices, routers, mobile data servers, and the like; and further, that the network illustrated herein may include different components and/or be arranged in different topologies than that shown in FIG. 2. A host system may be provided, which can be an own-premises local area network (LAN), or wide area network in communication with LANs, with local computing resources such as one or more servers 250, one or more data repositories 255 and client devices 251 such as terminals or workstations. The servers 250 and data repositories 255 represent controllers, security and information technology policy modules, application servers, messaging servers, file servers, databases, memory devices and the like for providing services to users over the LAN and also over the public or private network 224 to users at their respective electronic devices, and to transmit data (such as messages) to destinations and receive data from outside the host system over the network 224. Host system and its elements will include, as will be appreciated by those skilled in the art, those components generally included in such devices, such as communication subsystems for communicating over one or more fixed or wireless networks, one or more processors, data stores, disk arrays, and the like. The services can include but are not limited to messaging, directory services, collaborative applications, calendaring applications, search engines and file servers, and it will be appreciated by those skilled in the art that the various network components 250, 255, 251 will be adapted for use with those services.

Messaging services are implemented using one or more servers 250 provided with means for storing messages (e.g., a database or a suitable data repository 255) for each message service or format available using the host system, such as email, instant messaging, voicemail, and the like. The server 250 (or a plurality of such servers) and its corresponding data repository 255 can therefore store all received and sent messages on behalf of each user, whether those messages originated inside or outside the host system. In some embodiments, messages sent and received by a user may be stored only locally on the user's client device and not maintained in a persistent store in the host system, while in other embodiments the messages are stored both locally at the client device as well as the server, in which case the message data stores on the client device and the server are synchronized or reconciled periodically. The user device may be any suitable computing or communication device adapted for composition and transmission of messages such as the client devices 251 or electronic devices 100, 100', 100" illustrated in FIG 2. In fact, a single user may use multiple devices 251, 100, 100', 100" to access the host system services. For ease of reference, a single electronic device 100 is referred to although it will be appreciated by the reader that these embodiments may be implemented using each of the client or electronic devices.

The host system may operate from behind a firewall or proxy server 266, which provides a secure node and optionally a wireless internet gateway for the host system. Client devices such as the electronic device 100 can then access the host system wirelessly through the firewall or proxy server 266, as denoted by the access point 207. External access to the host system by devices 100 may also be provided via a public or private network 224. The device 100 may be configured to access the public switched telephone network 222 through a wireless network 200, which may comprise one or more nodes 202 configured for communication in accordance a suitable mobile telephony standard. In turn, the wireless network 200 provides the electronic device 100 with connectivity to the Internet or other public wide area network 224, and thence to the organization's host system. Alternatively or additionally, if the mobile device is provisioned to communicate over wireless networks that are typically IP-based, such as wireless LANs implementing the Wi-Fi protocol (one or more of the IEEE 802.11 suite of protocols), personal area networks implementing other protocols such as Bluetooth, other wireless networks implementing wireless broadband standards such as WiMAX (one or more of the IEEE 802.16 suite of protocols), and the like, the mobile device 100 accesses the public or private wide area network 224 through a third-party access point, such as the user's own personal access point and Internet connection, or a third party hotspot device, as denoted by the access point 205.

The services above, such as directory services and messaging, can be provided in a self-hosted system as suggested above, i.e., a host system supplied by and managed by the organization itself. However, the person skilled in the art will appreciate that one or more services provided to organization users may instead by provided by third parties in software as a service, platform as a service, or infrastructure as a service arrangement, colloquially referred to as cloud computing services. For example, email messaging services or collaborative applications can be hosted by a third party service maintaining an external server 260 and data repository 265. Access to the external server 260 can be made available both externally to external client devices such as the electronic device 100, and to client devices 251 within the host system's LAN over the public or private network 224. Regardless, the host system's network services are made available only to those users who possess sufficient credentials to access the services, whether they are accessed internally or externally, and whether provided by the self-hosted or the virtually (externally) hosted system. Each user is therefore provisioned with an account for accessing the host system's services, whether self-hosted or externally hosted by a third party. Messaging services in particular are accessible by the users through client messaging applications executing on the users' electronic devices 100 which communicate with a message server such as the server 250 or 260.

The person skilled in the art will appreciate that the network arrangements and host system described with reference to FIG. 2 comprise only one example, and that the embodiments described herein may be adapted to operate using any appropriate configuration of the organization's host system, any public or private network providing external access to the organization's host system, and regardless whether a user of the domain accesses the host system from within the organization's LAN or externally.

The electronic device 100, 100', 100", other client device 251, and/or the server 250, 260 (or another computing device in the host system) may be configured to implement the methods described herein. These embodiments are described principally with reference to email messages, the general form and construction of which will be known to those skilled in the art. Email is selected for these examples due to its prevalence; however it will be appreciated by those skilled in the art that these embodiments need not be restricted to text-based electronic communication data structures, but can be applied, with suitable modifications, to the addressing of other types of electronic communication data structures. For instance, a meeting invitation or other type of calendar event, or a task item, may be composed by a user of the electronic device 100 and may involve the selection of recipients (e.g., invitees or delegates), as might posts or messages generated and transmitted using social networking applications. Further, rather than using the embodiments and examples described herein to select addressees for a message being composed, they may be applied in other contexts where a selection of one or more users or entities is required, as in the cases of access control or privacy (e.g., the selection of users to be given access to a particular domain, subdomain or document).

When composing messages or otherwise selecting users, recipients or other such designates, the user composing the message or engaging in the selection is typically required to either manually enter the addressees by typing in some identifier for each addressee, or manually select the addressees from a list or directory. The identifier for a given addressee (here referred to as a "recipient identifier") may be an address associated with the addressee, in a form compliant with a governing standard or protocol. The common form of an email address or other electronic message address will be known to those skilled in the art. The recipient identifier may also be a common name or friendly name for the addressee, which may be the addressee's personal or entity name (e.g. first and last name, first name only, last name only, corporate or department name), a nickname, or a screen name. Addressees, of course, need not be individual recipients. Addressees can include other entities (corporate, departmental, etc.) to which a messaging address has been assigned

The common or friendly name may be stored in association with the formal address in a data store such as a directory or repository accessible to the electronic device 100 sending a message, or in a local data store such as an "address book" or contact database, or another type of contact data store located at the electronic device 100 itself. An address book, typically, includes those addressees that the user of the electronic device 100 or of an account associated with the electronic device 100 has chosen to include in the address book. A local data store, however, may include other addressees (by address and optionally by common or friendly name) that were not selected for inclusion in the address book, but were previously identified as a correspondent of the electronic device user due to their inclusion as an addressee or sender of a message sent by or received at the electronic device 100. An example of a method of compiling a contact data store of this type is described in co-pending United States Patent Application No. 12/755,186 filed on 6 April 2010 (US 2011/0087747). Briefly, a contact data store is compiled through collection of recipient identifiers from incoming and outgoing messages in a message data store, optionally with a timestamp denoting the last time that recipient identifier was obtained from the message data store and a frequency value. Each time a message is received or sent, a contact data store management process is notified, and collects the recipient identifiers from the message. Recipient identifiers may be maintained in the contact data store using a first-in-first out methodology, with the contact data store being limited to a specified size or number; thus, older recipient identifiers are gradually removed from the contact data store, so that the contact data store represents a set of addressees currently used by the electronic device user. Alternatively, if the recipient identifiers in the contact data store are stored with a timestamp, those identifiers that have been present in the contact data store for longer than a predetermined period of time are removed; or those recipient identifiers that are used most frequently in messages are maintained in the contact data store longer than identifiers used less frequently.

Another source of recipient identifiers are the message data stores at the electronic device 100 (or indeed at a server associated with an account provisioned at the electronic device 100), since messages are typically stored in association with a recipient identifier (either the formal address, common or friendly name, or both). In the case of email, for example, the formal address, and/or the common or friendly name, is typically included within the email message itself. The format in which a message is stored by the messaging application at the electronic device 100 may vary according to the specific implementation details. For example, each message may be stored as a distinct object in memory at the electronic device 100. In other cases, messages may be concatenated and stored in a single file.

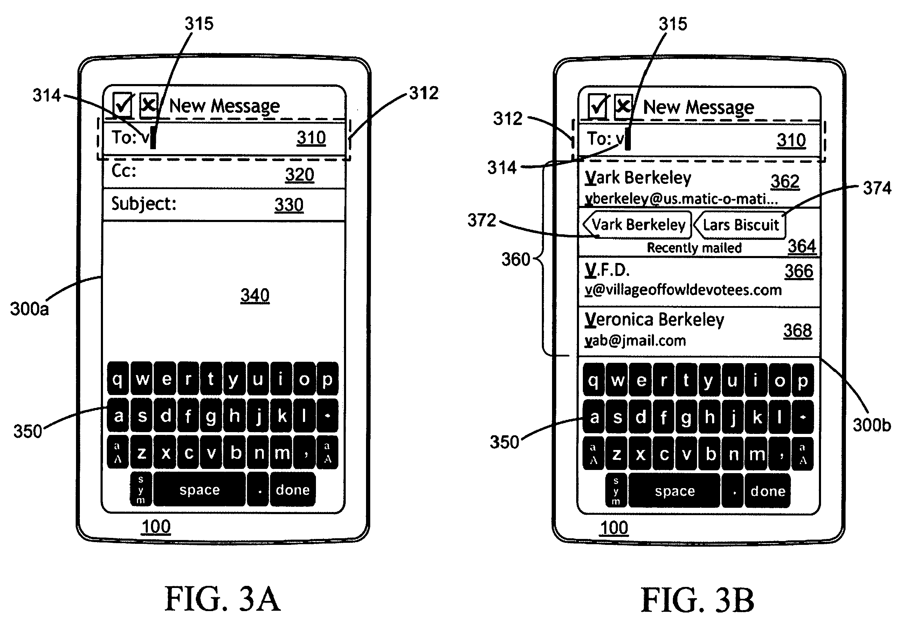

A typical view of a message composition screen 300a as might be generated and displayed by a messaging application executing at an electronic device 100 for use in composing messages is illustrated in FIG. 3A. Generally, in this description, operations are referred to as being carried out by the electronic device 100 for ease of exposition. It will be understood by those skilled in the art that in the various examples presented herein, such operations may be carried out through execution of the messaging application itself, the operating system 140, or another module executing at the electronic device 100, or a combination of two or more of these components. In the example of an email messaging application, user interfaces of which are illustrated, a new message composition screen typically includes a number of input fields. These input fields can include one or more recipient identifier entry fields. In the example of FIG. 3A, two such fields are provided: a direct addressee field (e.g., a "To:" field) 310, and an indirect ("carbon copy") addressee field (e.g., a "Cc:" field) 320. Other recipient identifier entry fields may be included, but are not shown here, such as a blind carbon copy ("Bcc:") field. The meaning of the terminology used herein, such as "direct" "indirect", "To:", "Cc:" and "Bcc:" will be understood by those skilled in the art. Other input fields that can be included in this message composition screen 300a include a subject line entry field 330, for the input of a subject line for the message; this subject line is conventional, but may be excluded in some message formats. The screen 300a also includes a content entry or message body entry field 340, where the actual body of the message can be composed.

In the examples depicted herein, the screens are shown with a superimposed virtual keyboard 350. Virtual keyboards 350 of this type are often provided on touchscreen-based electronic devices 100 for the entry of text, and may be automatically displayed for receiving user input (via touch) when a text-based input field is in focus, i.e., capable of receiving input. The meaning of "focus" will be understood by those skilled in the art. It will be understood by those skilled in the art, however, that the virtual keyboard 350 is not required, and in some implementations (even those executing on touchscreen-based devices) the virtual keyboard 350 is not provided, and user input may be effected using some other user interface mechanism, such as a physical keyboard, voice command interface, and so forth.

When a new message composition screen 300a is generated and displayed, the various input fields 310, 320, 330, 340 are typically blank. In some implementations, not every field 310, 320, 330, 340 may be shown in a single message composition screen 300a. In some implementations, the content of one or more of these fields may be predefined. For example, when composing a message in reply to, or forwarding, a previously received message, default subject line content is typically generated by the messaging application that includes the subject line of the previously received message, and optionally a token to indicate that the new message is a reply to or forward of that previously received message (e.g., a "Re:" or "Fw:") token preceding the subject line). In addition, the message body input field 340 may be pre-populated with content quoted from the previous message. Similarly, when the message is being composed in reply, at least the identifier of the sender of the previous message is included as a direct recipient of the new message. Other recipients of the previous message may be included as direct or indirect recipients. If the input fields 310, 320 and/or 330 are included in the message composition screen 300a, then these fields may be pre-populated with this content. In some implementations, one or more of these input fields may be omitted altogether, although this may prevent the user from editing those fields if desired. In still other implementations, message composition may take place over multiple screens: a first screen may receive input identifying the intended recipients of the message, while a second screen receives input of message body content. The examples described herein may be carried out, with modification as required, with or without pre-populated input fields 310, 320, 330.

As mentioned above, the user composing the message or otherwise selecting the recipients or designates must engage in some amount of manual effort to enter or select those recipients. If the message is a reply message, then as noted above recipient identifiers may already be included in one or more of the recipient identifier input fields 310, 320. Regardless, the user may wish to add direct or indirect recipients. This may be done by inputting text or some other data in the corresponding input field 310, 320 using techniques known in the art, such as inputting using the virtual keyboard 350. In the example of FIG. 3A, the first recipient identifier input field 310 is in focus. For ease of identification, focus is indicated by the highlight box 312. When an element of a displayed screen is in "focus", that element has been selected either expressly or implicitly through user input or operation of the application. Selection may be carried out by the user by navigating a cursor to that element's position, and generating a signal (such as a mouse click or other pointing device click) to indicate selection of the element under the cursor. In a touchscreen-enabled application, selection may be carried out by the user touching the touchscreen (using a finger, stylus or other suitable implement) at a position coinciding with the desired element. Once selected, the element in focus is capable of receiving further user input, whether it be input of text (as in the examples here) or some other content using a user interface mechanism such as a physical or virtual keyboard, voice command interface, or via an instruction to insert content (e.g., a "paste" command); or user input defining an action to be taken on that element (also described herein).

In this particular example, the first recipient identifier entry field 310 is in focus and, as illustrated in FIG. 3A, is receiving capable of receiving input. Readiness of a field to receive text input may be indicated by an insertion bar 315. In all of the examples and variations described herein, the insertion bar 315 is not a necessary implementation, but is used in the accompanying figures for the purpose of illustration. In the example of FIG. 3A, an initial text string (here, a "v") 314 has been entered, and the field 310 is capable of receiving additional input.

Typically, the user must enter sufficient text in the field 310 to unambiguously identify a recipient by identifier. This identifier may be a formal messaging address, or a common or friendly name; if the latter, the messaging application may query the address book or contact data store for an address matching the input common or friendly name, and associate that address with the input field as well (although the message composition screen 300a may continue to display only the common or friendly name). The address, whether input directly by the user or retrieved by the messaging application, is then used to address the message for transmission to the recipient(s). It is useful to include a feature, such as a drop-down list (not shown in FIG. 3A), listing common or friendly names and/or messaging addresses of possible addressees matching the input text 314, that is to say, containing text matching the string input in the field 310. These possible addressees may be retrieved from the address book or contact data store, for example in the manner described in the above-cited co-pending application. As the user continues to enter text in the field 310, the listing is refined to reflect only those common or friendly names and/or messaging addresses that match the input text. At any point, the user may select one of the possible addressees included in the listing, and that addressee is then inserted into the recipient identifier input field 310. The field 310 then displays the common or friendly name, messaging address, or both, for the selected addressee. The same procedures, of course, may be implemented for other recipient identifier input fields such as 320. The listing of matching addressees need not be provided in a drop-down list, but in some other graphical user interface element in this example. Alternatively, rather than typing, the user may invoke a display of the address book (for example, through a context menu option) and select an addressee from the address book.

This procedure is then carried out for each desired recipient of the message being composed. Thus, if the message is intended to be sent to five recipients, the user must carry out a selection method for each one of those recipients. The device processor executing the messaging application and any other operating system functions to implement this procedure must therefore execute those functions for each added recipient. This is particularly onerous for both the device processor and the user when the message is intended to have many recipients. If the user forgets to include one of the intended addressees, then he or she may need to send a second message to the missed addressee (or perhaps to all addressees, including the missed addressee), thus increasing message traffic.

Users often develop communication habits; they may tend to message the same set of addressees. In a social context, they may tend to message the same group of friends; in a professional context, they may tend to always copy messages to an assistant or manager when sending messages to certain individuals in an organization. A "shortcut" sometimes implemented by a user who needs to send a message to a number of recipients is to locate a previous message having the same set of recipients as addressees or sender, and to compose a message in reply to all of those addressees. That way, the recipient identifier input fields 310, 320 are pre-populated as described above, avoiding the need for the user to manually select each individual recipient. However, as noted above, the reply message typically includes the previous message's subject line and content quoted from the previous message body. If the user does not take steps to edit the subject line and message body, then they will be included in the new message as well. The unnecessary inclusion of the quoted content of the previous message can unduly inflate the size of the new message.

An alternative solution is to expressly define a group of recipients using a group identifier (e.g., using an alias or messaging service that permits the creation of recipient groups), so that the message need only be addressed to that group identifier. However, a user might send messages to a variety of groups of varying composition, and remembering what group identifier corresponds to which set of recipients may not be any more convenient than manually selecting each recipient each time. In addition, these groupings may be fluid; if one addressee is away, the user might wish to send the message to an alternate addressee. Further, if one member of the group is unavailable for messages, they will continue to receive these group messages since they are included in the group, resulting in unnecessary transmission of messages. In addition, some recipient groupings are of a transitory nature, whereas when a group identifier is defined, it is typically stored until the user or an administrator expressly instructs its deletion.

Accordingly, an enhancement to identification and retrieval of recipient identifiers for populating a recipient identifier input field is provided. Turning to FIG. 3B and a further view of the message composition screen 300b, once some initial input is provided in a recipient identifier input field 310 or 320 (in the example here, field 310), the electronic device 100 operates to identify and retrieve recipient identifiers matching that initial input, and to display some or all of these recipient identifiers as suggested entries for the input field 310 or 320. In this example, the identification, retrieval, and display of these suggested entries is carried out in response to detection of input in the field 310 or 320; in other examples, this is carried out in response to an express command by the user.

In FIG. 3B, the initial input 314 is a partial recipient identifier (since the user began entering text that might constitute the beginning of a friendly name or messaging address). The electronic device 100 uses this partial recipient identifier to locate recipient identifiers (either friendly or common name, or address) matching the partial recipient identifier. These recipient identifiers may be located in the address book or other contact database, and/or in the aforementioned contact data store. These recipient identifiers may also be located in one or more message data stores. An assortment of suggested entries for the recipient identifier input field comprising some or all of the located recipient identifiers is then presented to the user for selection. In many of the examples illustrated herein, the partial recipient identifier is a single character; in some cases, though, the number of matches with a single character may be too large to be meaningfully displayed to the user. In such cases, the electronic device 100 may not attempt to locate matching recipient identifiers until further content has been added to the partial recipient identifier.

The assortment of suggested entries is presented in a suggested entry user interface element 360 that may be in the form of a drop-down list, as illustrated in FIG. 3B, and optionally, the suggested entries are ordered accordingly frequency of use, with those entries corresponding to addressees more frequently contacted being listed first. An example implementation for determining frequency of use of various recipient identifiers is described in the above-cited co-pending application.

The assortment may be provided in another user interface format. For example, in a graphical presentation, the suggested entries may be arranged in a scattered or "cloud" format, with more frequently contacted addressees depicted in a larger and/or bolder font face, and/or closer to the centre of the cloud. The suggested entries may also be presented audibly or using a different non-visual interface. An example of one such suggested entry is the first entry 362; as shown in that entry, those parts of the recipient identifiers (both common name and email address) for the addressee of that entry 362 are visually distinguished from the remainder of the identifier, for ease of identification. Other entries of this type shown in FIG. 3B are suggested entries 366 and 368.

In addition to locating and presenting entries of this type, the electronic device 100 also provides suggested entries that comprise a combination of recipients, i.e., multiple recipients, such as multiple recipient entry 364. A multiple recipient entry may be distinguished from the group identifiers discussed above, in that a group identifier has not necessarily been defined for the set of recipients included in the multiple recipient entry; rather, the multiple recipients each have distinct recipient identifiers (e.g., a distinct email address). The multiple recipient entry thus comprises a plurality of addresses or other recipient identifiers. The recipient identifiers within a given multiple recipient entry are obtained, in this example, from data sources such as the message data store. The multiple recipient identifiers are recipient identifiers taken from a previous message associated with a recipient identifier matching the partial recipient identifier input in the field 310. The previous message may have been sent or received from or by a messaging account associated with the electronic device 100, and/or from or by the electronic device 100 itself; the recipient identifier associated with the previous message may have been a sender or recipient of the message.

In the example of FIG. 3B, the previous message is a previously sent message that was addressed by the user to the addressees "Vark Berkeley" and "Lars Biscuit". This particular previously sent message was identified by the electronic device 100 because at least one of its recipient identifiers, i.e., "Vark Berkeley" (and the corresponding email address) contained a text string matching the partial recipient identifier "v" 314. Thus, the remaining addressees of that identified message were retrieved (in this case, the single additional addressee "Lars Biscuit"), and included in the multiple recipient entry 364. Thus, multiple recipient entry 364 contains two elements 372 and 374, which correspond to these two addressees of the previously sent message. In this manner, the suggested entries displayed on the message composition screen 300b reflects a possible messaging behaviour of the user; since the user had previously sent at least one message to this set of multiple recipients before, this set of multiple recipients is included with the suggested entries 360. In the example of FIG. 3B, the addressees in the multiple recipient entry 364 are depicted in a different visual format than the other entries 362, 366, 368. The distinctive visual format is optional, but may serve to visually indicate that these multiple recipient identifiers were selected based on a previous relationship between the user of the electronic device 100 and the two addressees in the multiple recipient entry 364, as manifested by the presence of the previous message identifying the user as the sender, and the two addressees as the recipients. Alternatively, it may serve to identify recipient identifiers that have been confirmed as valid (e.g., having a validly formed email address), which could have been determined from the fact that the identifiers were retrieved from a message that had been successfully sent from the electronic device 100.

Once the suggested entries are displayed in the interface element 360, as in FIG. 3B, the user may choose to select one of the suggested entries for entry into the recipient identifier input field 310 currently in focus, or may alternatively edit the content of the field 310. The user may, for example, delete what was entered, in which case the suggested entries interface element 360 is dismissed from the display. The user may alternatively continue to input data in the field 310, for example by continuing to type, in which case the electronic device 100 will update the suggested entries interface element 360 to include only those suggested entries (which includes multiple recipient entries) that match the new input.

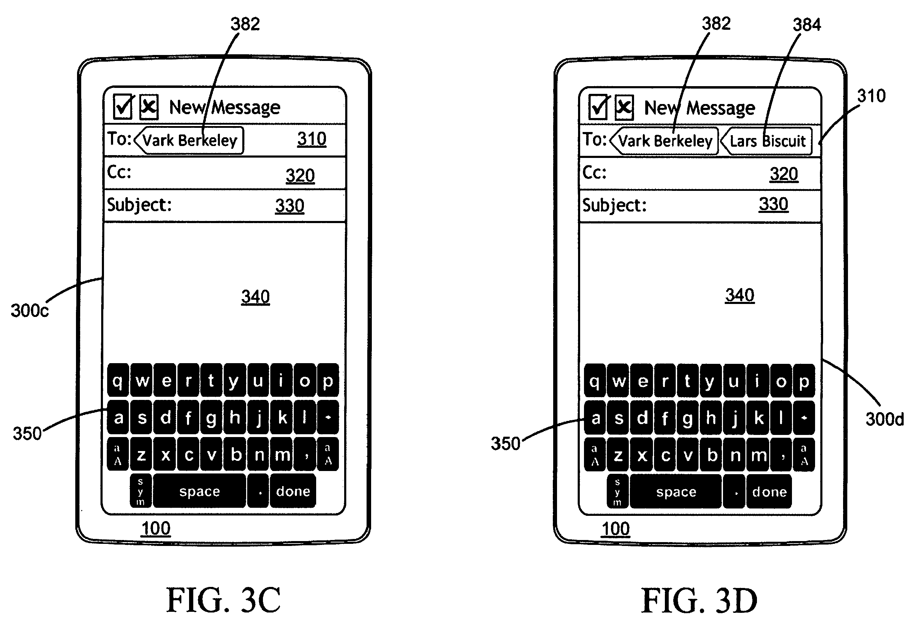

FIGS. 3C and 3D illustrate possible resultant message composition screens 300c, 300d in the event the user chooses to select one of the suggested entries for entry into the recipient identifier input field 310. Selection of one of the suggested entries may be carried out as mentioned above, using conventional user interface mechanisms and techniques. If the first suggested entry shown in FIG. 3B, 362, is selected, then the resultant screen may resemble 300c, in which a recipient identifier 380 has been inserted into the recipient identifier entry field 310. If the multiple recipient entry 364 is selected, then the resultant message composition screen may resemble 300d in FIG. 3D, in which two recipient identifiers 382, 384 corresponding to the recipient identifiers included in the multiple recipient entry 364 have been inserted. Thus, the message being composed has been addressed to two recipients.

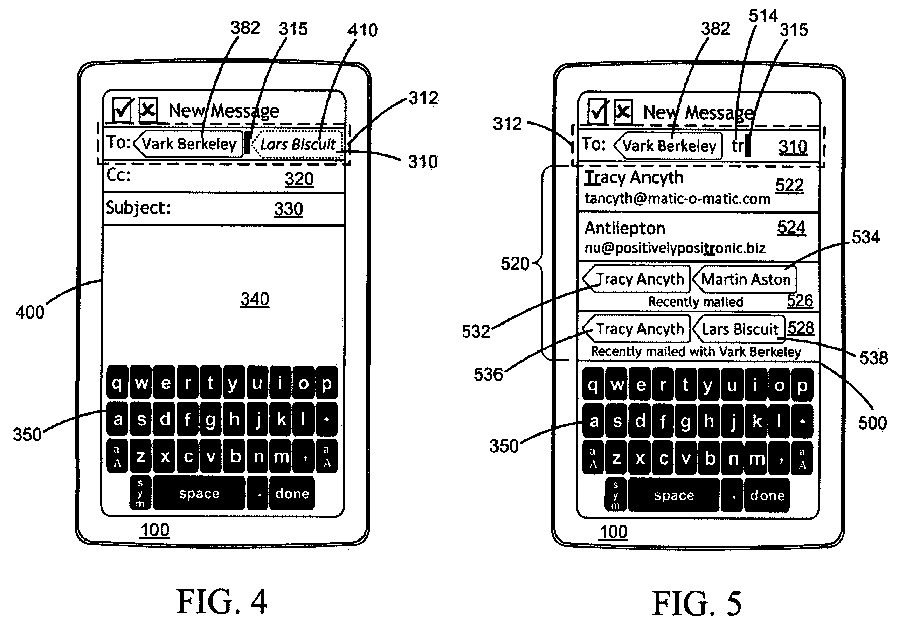

The foregoing examples were illustrated in the context of a new message being composed, without any other data (e.g., other addressees) being input in any of the input fields. As a further example, additional suggested entries may be provided even after at least one recipient identifier has been added to one of the fields 310, 320. Turning to FIG. 4, a further message composition screen 400 is shown. In this example, one recipient identifier has been entered in the first field 310. This may be the result of the operation described in connection with FIGS. 3A through 3C, or alternatively as a result of the user manually entering the complete recipient identifier for that addressee without using the suggested entry interface element 360. In this example, the first recipient identifier entry field 310 remains in focus, or focus has been returned to that field 310, as indicated by the highlight box 312 and the insertion bar 315. Upon determining that this field is in focus, the electronic device 100 obtains the recipient identifier from that field 310 (or multiple recipient identifiers, if more than one is provided in the field 310) and locates any previous messages designating that recipient identifier as an addressee (or, optionally, sender). If the previous messages thus located designate multiple recipient identifiers, then the other recipient identifiers for those messages are retrieved as well, and one or more of those recipient identifiers are displayed as suggested entries 410 within or adjacent to the field in focus. In some examples, only one recipient identifier is displayed as a suggested entry 410, as in FIG. 4. This one recipient identifier may be the first additional recipient identifier found in the most recent previous message matching the entered recipient identifier 382, or it may be a most frequently contacted addressee of the rest of the recipient identifiers retrieved from that previous message, for example as may be determined using the techniques of the above-cited co-pending application. In other examples, multiple suggested entries may be displayed within the field 310 or adjacent to the field.

In the example of FIG. 4, one suggested entry 410 is displayed within the field 310. In this example, the suggested entry 410 is visually distinguished from the entered recipient identifier 382 to differentiate it from a recipient identifier that has been confirmed as an intended addressee of the message. For example, the suggested entry 410 may be depicted in a faded color compared to the entered recipient identifier 382, in a different font face, and/or it may be displayed together with an indicator that the recipient identifier is only suggested or tentative (such as a question mark graphic). The suggested entry 410 is thus made available for selection in a location that coincides visually and spatially with the recipient identifier entry field 310, so that it is readily available and accessible to the user.

The suggested entry 410 may remain visible, and available for selection by the user, until such time that the user provides further input causing the suggested entry 410 to cease to be displayed in the field 310, such as a dismiss command to remove the suggested entry 410, inputting additional text (i.e., a new partial recipient identifier), or moving focus away from the field 310. If, on the other hand, further input is provided that selects the suggested entry 410 or confirms that the suggested entry 410 is to be added as a recipient (e.g., a touch event such as a tap on the suggested entry user interface element), then the suggested entry 410 continues to be displayed, in which case its appearance may change to signify that its inclusion in the field 310 has been confirmed. For example, it may be changed so that it no longer is visually distinct from the appearance of the entered recipient identifier 382, but instead resembles the identifier 382 in color, font face and/or indicator, and so on. If this suggested entry feature is not desired, a messaging application option setting may be used to disable this feature.

FIG. 5 illustrates a possible message composition screen 500 that can be displayed in response to one possible user input after display of the screen 400, which is the user inputting a new partial recipient identifier 514 in the same recipient identifier entry field 310. In response to detecting this input, the electronic device 100 responds in a similar manner to that described above in relation to FIG. 3B, by retrieving recipient identifiers that match the partial recipient identifier 415 and displaying the assortment of suggested entries 520. Again, the suggested entries interface element 520 may include individual recipient identifier listings 522, 524, which again may be listed in an order of frequency of use (although other orders, such as alphabetic, may certainly be employed). In this example, the suggested entries include recipient identifiers having the input partial recipient identifier 814 anywhere within the common or friendly name or address. In some embodiments, the partial recipient identifier must match the start of the common or friendly name or address only, in which case the listing 524 would not appear.

The suggested entries can also include multiple recipient entries such as 526 and 528, again identified in the manner described above. However, in this variation, not only those previous messages designating recipient identifiers corresponding to the partial recipient identifier are used to generate suggested entries, but also those previous messages that designate both recipient identifiers corresponding to the partial recipient identifier as well as the recipient identifier already entered 382 in the recipient identifier entry field 310. The resultant list of suggested entries provided may therefore differ from the list of suggested entries that might be provided, had there been no entered recipient identifier 382. In the example of FIG. 5, previous messages sent by the user to "Tracy Ancyth", "Martin Aston" and "Vark Berkeley", and to "Tracy Ancyth", "Lars Biscuit" and "Vark Berkeley" were located. These messages meet one or both of the constraints defined by the data in the recipient identifier entry field 310 in focus, since both messages have an addressee matching the partial recipient identifier 514. The second message also has an addressee matching the entered recipient identifier 382. Accordingly, the remaining recipient identifiers from those messages were selected and presented as elements 532, 534 in multiple recipient entry 526, and as elements 536, 538 in multiple recipient entry 528, respectively. In these examples, optional additional text is provided in the multiple recipient entries 526, 528 to advise the user of the source of those suggested entries. In still a further variation, only those messages that meet all constraints input in the field 310-that is to say, only those messages that designate any recipient identifiers entered in the field and match the partial recipient identifier-are used to generate multiple recipient entries.

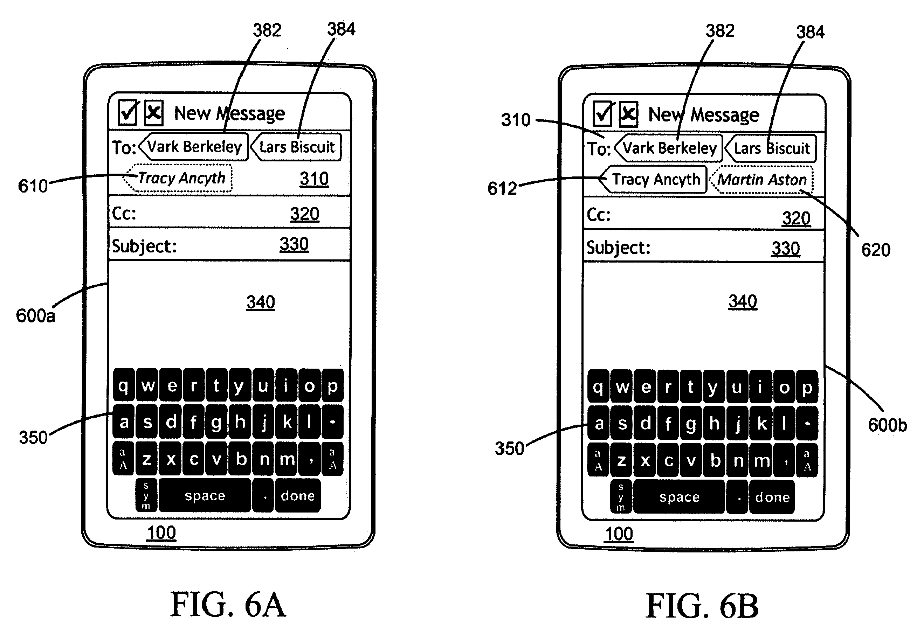

FIGS. 6A and 6B illustrate a sequence of further possible message compositions screens 600a, 600b that can be displayed in response to other user input after display of screen 400 of FIG. 4. In the example of FIG. 5, input was received in the recipient identifier entry field 310; and in response to detection of the received input, display of the suggested entry 410 of FIG. 4 was cancelled, and the suggested entry 410 was removed from the field 310. If, however, input is detected confirming that the suggested entry 410 is an intended recipient of the message in the manner discussed above, a second, and even subsequent, suggested entry may be identified and displayed in the recipient identifier entry field 310 based on one or more of the recipients already entered in the field 310. In FIG. 6A, it can be seen that recipient identifier 384 has been confirmed, and is thus displayed as an addressee of the message being composed. A similar process to that described in the context of FIG. 4 is then carried out to retrieve other recipient identifiers to suggest in the recipient identifier entry field 310, such as suggested entry 610. For example, as with the example of FIG. 4, previous messages that designated the combination of recipient identifiers currently entered in the field 310 are located, and any other recipient identifiers associated with those messages are retrieved as well and displayed as a suggested entry. Alternatively or in addition, previous messages designating only one of the recipient identifiers currently entered in the field 310 are located as well in order to identify other parties (senders or recipients) to those messages for inclusion in the field 310 as a suggested recipient. If multiple recipient identifiers are found, then all, some, or only one of the found recipient identifiers may be displayed in the field 310 as a suggested recipient; if only some or one identifier is displayed, this one identifier may be selected according to age (one or more recipient identifiers associated with the most recent located message), or frequency of occurrence (one or more recipient identifiers occurring the most frequently in the located messages), or another suitable rule.

If the user repeats the action of confirming the addition of the suggested entry 610, then the display may update to the example screen 600b shown in FIG. 6B, in which the previously suggested entry, 610, is now displayed as a confirmed recipient of the message 612. Suggested entries displayed in the recipient identifier entry field 310 may then continue to be updated according to the same process described above; in the example of FIG. 6B, a further suggested entry 620 has been displayed, based on a detected association between the recipient of the suggested entry 620 and one or more other designated recipients 382, 384 612 of the message.

Thus, as can be seen from the sequence of example screens 400, 600a and 600b, as the user selects suggested entries for inclusion as recipients of the message, the suggested entries displayed in the recipient identifier entry field 310 can continually update to suggest additional recipients until focus is moved away from the field 310.

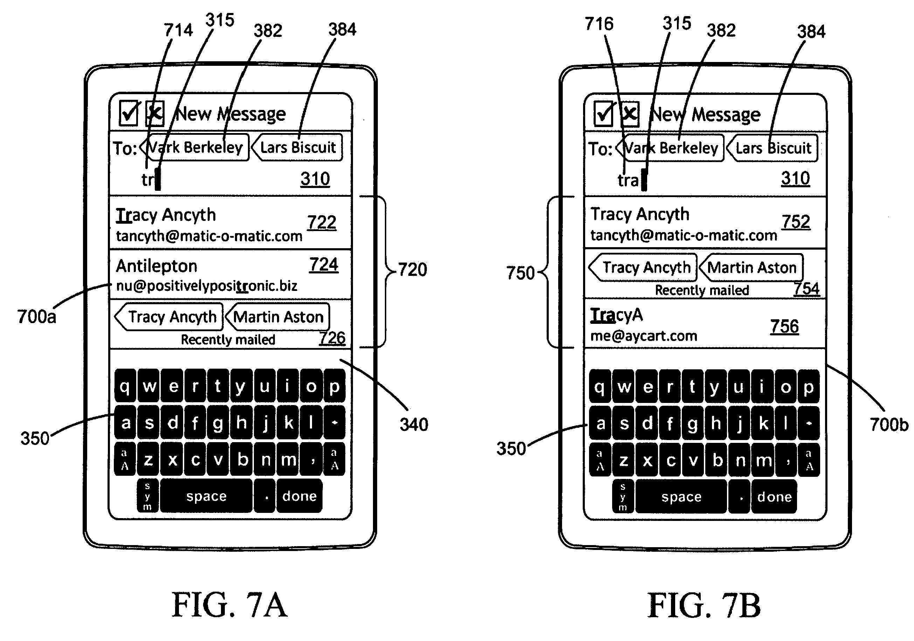

Similarly, even after multiple recipients have been suggested by the device 100 and confirmed by the user as recipients of a given message, the user may continue to input further partial recipient identifiers as in the examples of FIGS. 3B and 5, and the device can continue to update suggested recipients in the recipient identifier entry field 310 as changes are detected to the user input. FIGS. 7A and 7B illustrate a possible sequence of screens 700a, 700b that may occur after FIG. 3D or 6A. In these examples, two recipients have been entered in the recipient identifier entry field 310, as shown by recipient identifiers 382, 384, and focus currently remains in that field 310, and at least a partial recipient identifier 714 has been input in the field 310. Again, as described earlier, the partial recipient identifier is used by the electronic device 100 to locate recipient identifiers (either friendly or common name, or address) matching the partial recipient identifier, in the locally stored address book or contact database, contact data store, or in previous messages. Located recipient identifiers are then presented in the screen 700a, for instance in a drop-down list 720. As before, individual entries in the list 720 can include single recipient identifiers 722, 724 matching the input string 714, or may include combinations of identifiers 726 collected from previous messages including at least one recipient that matches the input string.

As the user continues to change the input content in the recipient identifier entry field 310, the initial set of suggested recipient entries continues to be updated and represented on the screen in response to the changed content. Thus, in screen 700b of FIG. 7B, the list of suggested identifiers 750 has been updated from the list 720 to reflect those recipient identifiers 752, 754, 756 that match the updated input string 716. The updating in all of these examples may occur by way of a new query of the data stores on the electronic device 100 to locate matching recipient identifiers, or by way of a filtering of the initial set of suggested recipient entries to exclude those entries that no longer match the updated input string. In this example, one new identifier 756 has been presented; this identifier 756, although it would have been a match for the partial identifier 714 input in FIG. 7A, may not have been initially displayed in the screen 700a due to space constraints (for instance, the drop-down list 720 may have been scrollable to access other suggested recipients).

Updating may continue in response to each detected change to the partial recipient identifier input in the entry field 310-for instance, as individual letters are added or deleted-until such time that selection of one of the suggested recipients or recipient combinations in the list 750 is detected, input of recipient identifiers for that field 310 is cancelled (for example, by moving focus to another field in the screen 700b), no further recipient identifiers matching the input string 716 can be located, or a timeout or cancellation of message composition (which can include discarding the message or saving the message in draft form) occurs. Updating may result in new combinations of recipient identifiers being located and presented in the list 750 as appropriate.

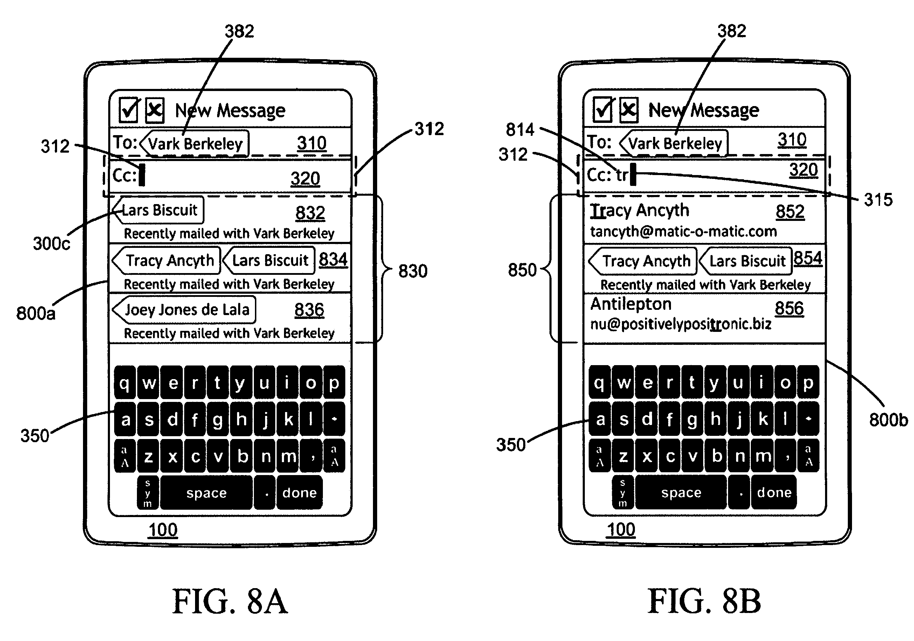

It will be appreciated by those skilled in the art that the foregoing examples can also be applied to other recipient identifier input fields as well, such as the indirect addressee field 320 or a "Bcc:" field, if available. A further example implementation relating to an indirect addressee field is shown in FIG. 8A. In this example, at least one recipient identifier 382 has been entered in the direct addressee field, recipient identifier entry field 310. Focus has been moved to the indirect recipient field, recipient identifier entry field 320, as shown by the highlight box 312 and insertion bar 315. In response to detecting the change in focus, and upon determining that at least some content (in this case, a complete recipient identifier 382, although this example may operate with a partial recipient identifier) is entered in the first field 310, the electronic device 100 operates to retrieve suggested entries by locating previous messages that have direct addressees matching the content (i.e., the recipient identifier 382) of the field 310, and identifying any indirect addressees of those messages. The recipient identifiers for those indirect addressees are then displayed in the suggested entry interface element 830, again shown here as a drop-down list. In this example, at least three such messages addressed to "Vark Berkeley" were located that included indirect addressees. Thus, in this example, three suggested entries 832, 834, 836 are provided, including one multiple recipient entry 634.

As with the examples described above, the suggested entries 830 may be dismissed by moving focus to another field, by expressly dismissing the suggested entries 830, by selecting one of the suggested entries 832, 834, 836, or by inputting data in the field 820 (i.e., a partial recipient identifier). FIG. 6B illustrates this latter option, in which new text 814 has been input into the recipient identifier entry field 820. In response to this input, the electronic device 100 operates to identify and display suggested entries 850, here containing individual recipient identifiers 852, 856 and multiple recipient entries 854, in a manner similar to that described above; however, in this example, the located messages used to generate multiple recipient entries such as 854 match the constraints of having both a direct addressee matching the entered recipient identifier 382, and an indirect addressee matching the input partial recipient identifier in the field 820.

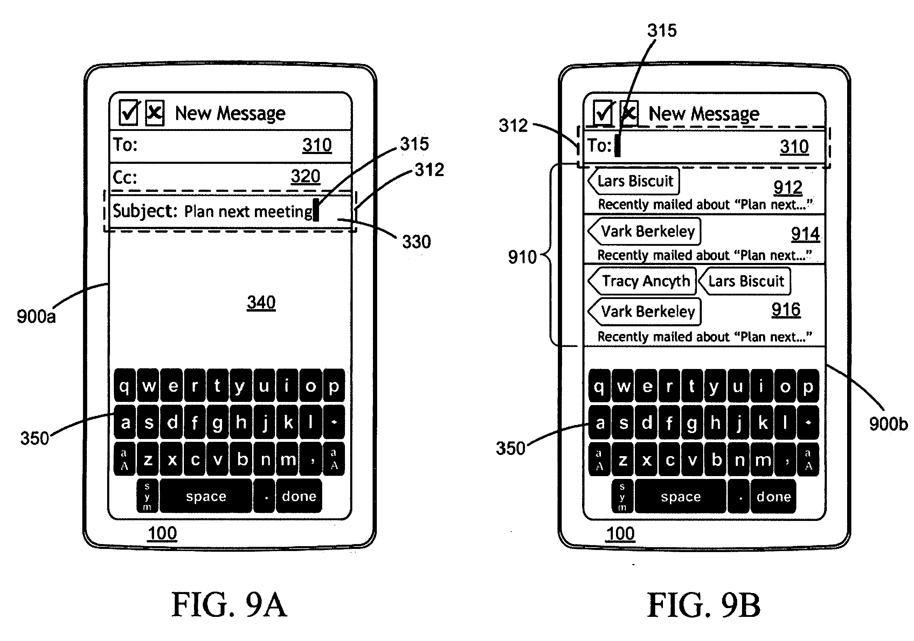

In still a further example, suggested entries may be generated based on an input subject line. Turning to FIG. 9A, an example of the message composition screen 900a is shown, in which content has been input in the subject line entry field 330. At the outset, focus is on this field, as indicated by the highlight box 312 and insertion bar 315. No input has been provided for either of the recipient identifier entry fields 310, 320. Once focus has been moved to one of these fields 310, 320, as shown in FIG. 9B, the electronic device 100 operates in a similar manner to that described above in respect of FIG. 8A to provide suggested entries in the user interface 910. In this case, however, the electronic device 100 locates previous messages having a subject line matching the content input in the subject line entry field 330. In this case, those previous messages would have the subject line "plan next meeting" (the match may be case-insensitive) or at least contain that string; for example, the subject line of the located message may include other content, such as "Re:", "Fw:", or indeed other substantive content. The suggested entries 912, 914, 916 may include explanatory text indicating that the recipient identifiers were selected based on previous email sent to or from those addressees using the subject line content. Again, one or more of the suggested entries may comprise a multiple recipient entry 916.

As mentioned above, in the case where a message is composed in reply to a previous message, the messaging application will typically populate the input fields 310, 320, 330 with content from the previous message, in which case there may not be a need to add further recipient identifiers to the reply message being composed. In some instances, however, the user may wish to add further direct or indirect addressees.

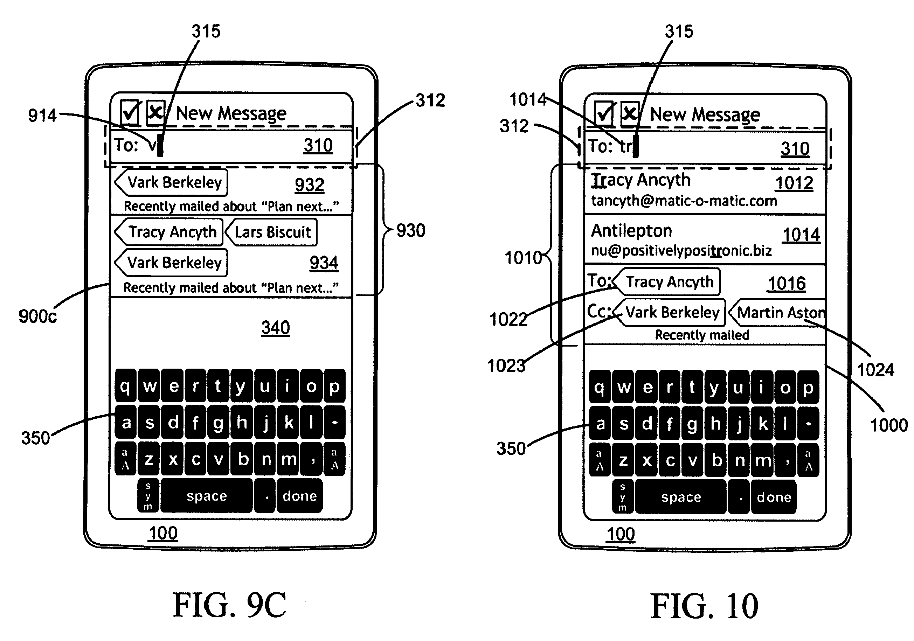

A further variation of this example is illustrated in FIG. 9C, in which a partial recipient identifier 914 has been input in the first recipient identifier entry field 310. In that case, the suggested entries are then derived from those located messages that not only have a subject line matching the input content of the subject line entry field 330, but also have an addressee with a common name or friendly name, or address, matching the partial recipient identifier 914. Thus, in FIG. 9C, the list of suggested entries 932, 934 in the suggested entry interface element 930 is a subset of the suggested entries provided in FIG. 9B.

In still a further example, the foregoing methods of providing suggested entries for one of the recipient identifier entry fields 310, 320 may be extended to provide suggested entries for several recipient identifier entry fields (i.e., both 310 and 320). Turning to FIG. 10, at least a partial recipient identifier is input in one of the recipient identifier entry fields; here, the first field, 310. The electronic device 100 operates to retrieve suggested entries 1012, 1014, 1016 for presentation in the suggested entry interface element 1010; however, in this example, suggested entries are provided not simply for that particular recipient identifier entry field in focus, but for at least one other recipient identifier entry field, in this case field 320. In the example of FIG. 10, at least one previous message was located having a first direct addressee ("Tracy Ancyth") corresponding to the partial recipient identifier 1014 input in the first field 310, which is also the input field corresponding to the direct addressee of the message being composed. This located previous message included at least two further addressees, who were indicated as indirect addressees of the previous message. The suggested multiple recipient identifier entry 1016, in this case, therefore includes three elements: a first recipient identifier 1022 corresponding to the direct addressee of the located previous message, and two recipient identifiers 1023, 1024 corresponding to the indirect addressees of that message. Upon selection of this particular multiple recipient entry 1016, the electronic device 100 would operate to insert these three recipient identifiers into the corresponding fields 310 (for the direct addressee), 320 (for the indirect addressees). In this variation, there may be single or multiple direct addressees, and single or multiple indirect addressees. There may also be "Bcc:" recipients retrieved from the located previous message as well, which may then be inserted into a corresponding indirect recipient identifier entry field (not shown).

It will thus be appreciated by those skilled in the art that the foregoing examples provide a method of electronic device operation enabling more efficient input of data in various input fields of a message composition screen, or input fields of any other type of composition or data entry selection screen where selection of users or sets of users is required. With a single action-such as a click, tap or swipe of an element such as the multiple recipient entry 1016 of FIG. 10-one or more input fields can be populated with multiple recipient identifiers, rather than requiring the user to repeatedly engage in inputting data for each desired addressee. Also, rather than requiring the device processor and other modules to engage in repeated queries and searches of message data stores or other local data stores for entries to populate the suggested entries user interface each time the user enters data to specify a new recipient, these queries and searches are effectively consolidated into a single search process, thereby reducing processing and memory overhead.

In all of the foregoing embodiments and examples, at least some suggested entries-including multiple recipient entries-are determined by locating messages meeting one or more of the constraints obtained from entered data in the various input fields 310, 320, 330, such as a partial recipient identifier, subject line, or complete (entered) recipient identifier. To improve the efficiency of the electronic device 100 in carrying out these methods, and to restrict the suggested entries to those suggested addressees or combinations of addressees that are likely to be the most relevant to the user's current activities, the scope of messages searched or queried may be restricted temporally to a recent time period, such as the previous day, week, or month. This temporal constraint on the identification and provision of suggested entries may be imposed by the local message data store or the contact data store, since either data store may automatically purge any entries or messages older than a preset age (for example, messages older than 30 days may be automatically deleted from device storage). However, this temporal constraint may also be defined separately from any memory management processes on the electronic device 100, such that only a subset of the messages on the device are searched to locate recipient identifiers for inclusion in the suggested entries.

In these various examples, when messages are located in order to generate suggested entries for display, the scope of messages searched may extend to any messages belonging to the same message thread as those messages that match the specified constraints, i.e., the partial or complete recipient identifier or subject line entered in one of the various input fields 310, 320, 330. The determination of thread membership for a received or sent message will be known to those skilled in the art. An example of such may be found in co-pending U.S. Patent Application No. 12/966,077 filed 13 December 2010 (US 2011/0231499).

In the above examples, suggested entries were obtained, at least in part, by searching a message data store for messages matching the specified constraints, and obtaining the set of recipient identifiers specified in those messages. In still a further variation, as messages are sent or received by the electronic device 100, a further process executes to catalog recipient identifiers and subject lines to provide a separate data store reflecting the usage of those recipient identifiers at the electronic device 100, and how they are used in combination with other recipient identifiers. The process of collecting recipient identifiers in this manner may be carried out in a manner similar to that described above with regard to the contact data store. Rather than searching a message data store to locate recipient identifiers for multiple recipient entries, this separate data store may instead be queried to obtain the identifiers for inclusion in the suggested entries.

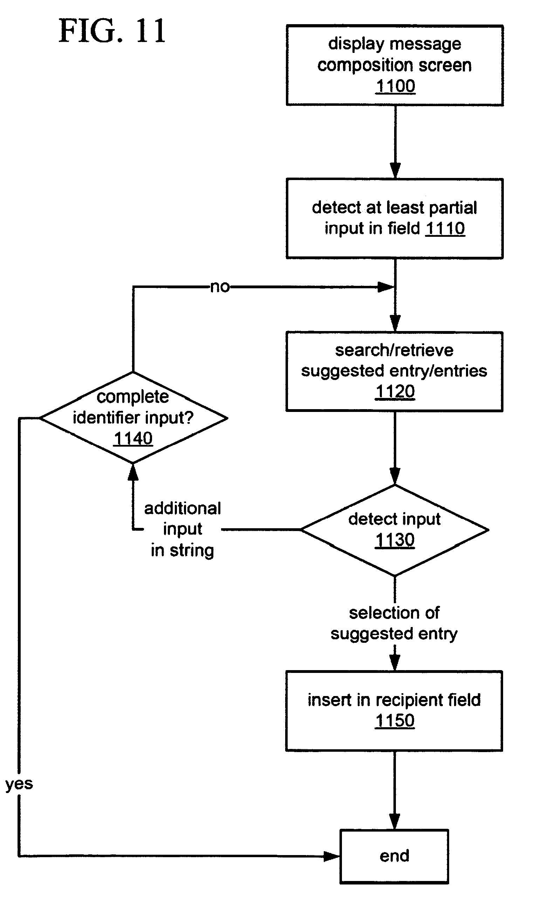

FIG. 11 illustrates an example method for implementation at the electronic device 100. At 1100, a message composition screen is displayed. This message composition screen may be pre-populated with data in one or more input fields, or may have all input fields blank. At 1110, input of data is detected; this may be at least a partial recipient identifier, or partial subject line, in one of the input fields. It may also be a complete recipient identifier, if one was previously entered. At 1120, the device 100 searches for and retrieves recipient identifiers as suggested entries for the same input field, or for other input fields in the message composition screen. As described above, these recipient identifiers may be obtained from local data stores including the message data store, and the suggested entries may include multiple recipient identifier entries. These suggested entries are displayed, and at 1130 the electronic device 100 detects user input. The user input may dismiss the displayed suggested entries, either by express command or implicitly through another action, as described above. Alternatively, if the detected input is selection of one of the suggested entries, at 1150 the recipient identifier or identifiers corresponding to the suggested entry is inserted into the one or more fields.

If the detected input is further input of a text string (i.e., an addition to the partial input already detected), at 1140 the device 100 determines whether a complete recipient identifier has been input. This determination may be made by comparing the input string to a known valid form of a messaging address. The determination may also be made by comparing the input string to recipient identifiers stored in the address book or the contact data store at the electronic device 100; if there is an unambiguous (i.e., unique) match between the input string and one recipient identifier, the string is associated with the address associated with that recipient identifier, and the device 100 does not attempt to match the input string any further-for example, the device 100 does not engage in the same matching process carried out at block 1120 in respect of the message data store. If a complete recipient identifier has not been input, the electronic device 100 repeats the search and retrieval at 1120 using the updated input, thus refining the suggested entries to a narrower set matching the updated input. As the user continues to add further input to the input field, the search process is repeated, further refining the resultant set of suggested entries. As these entries are further refined, the contents of the suggested entry interface element (such as the element 360 in FIG. 3), or the one or more suggested recipient identifiers in the input field (such as the suggested entry 410 in FIG. 4) may change as the updated input is matched against messages in the message data store or other data store. In some instances, continued input and repeated searching may result in a single match in the various data stores, in which case the suggested entries interface element may contain only a single suggested recipient identifier or multiple recipient entry, or the suggested entries displayed in the input field may be reduced to a single possible recipient identifier. In some cases, though, there may not ever be a unique match between the updated input and a single recipient identifier, as in the case where more than one addressee shares the same common or friendly name.

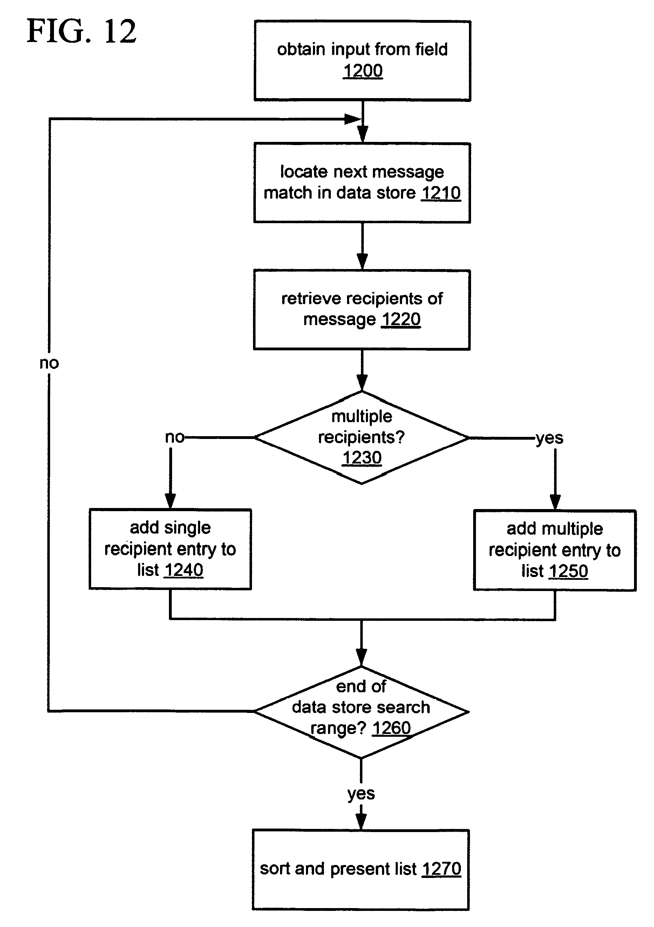

FIG. 12 illustrates a further method that may be implemented at the electronic device 100 to retrieve and present the suggested entries referenced in block 1120 of FIG. 11. After some content is detected in the input field, as in block 1110, a search or querying module obtains the content that was input in the field at 1200. The search or querying module may form part of the messaging application, be provided as an operating system function, or may be a separate application, such as a universal search application. In this example, the message data store is being searched; other data repositories, such as the address book or contact data store, may also be searched if the input includes a partial recipient identifier.

At 1210, the next message matching the search constraints-in this case, the field input, and optionally a time range or similar constraint on the scope of messages searched-is located, and the recipient identifiers from that message retrieved at 1220. If it is determined that there is only a single recipient at 1230, then this single recipient identifier is added as a single entry to a list of entries that may be presented to the user in the suggested entries interface at 1240. If there are multiple recipients, then the multiple recipient identifiers are added as a single entry to the list of entries at 1260. At 1260, the electronic device 100 determines whether the search has reached the end of the range of the message data store to be searched. If there is a temporal constraint and the messages in the message data store are being searched in reverse chronological order, then the determination may be whether the next message falls outside the specified date or time range for the search. If the search is not complete, the process returns to 1210. If the search is complete, the list of entries obtained at 1240 and 1250 is then sorted and presented to the user. Sorting may include organizing all entries in alphabetical order. In the examples described above, entries are also ordered by frequency of use. In the course of searching through the message data store, the same single recipient identifiers or set of multiple recipient identifiers may have been found and added to the list at 1240 or 1250 multiple times. The electronic device 100 then identifies these multiple occurrences, and ranks the retrieved entries in decreasing order of occurrence.

There is thus provided a method implemented at an electronic device, the method comprising: detecting input of a partial recipient identifier in a recipient identifier entry field of a message composition screen displayed at the electronic device; in response to detecting the input, presenting an initial set of suggested entries matching the partial recipient identifier for selection for the recipient identifier entry field, the initial set comprising at least one entry having a combination of recipient identifiers specified in a previous message, where at least one recipient identifier of the combination of recipient identifiers matches the partial recipient identifier; while the initial set of suggested entries is displayed, detecting a change to the partial recipient identifier in the recipient identifier entry field; and in response to detecting the change, updating the initial set of suggested entries and presenting the updated set of suggested entries in place of the initial plurality of suggested entries.

In one aspect, updating the initial set of suggested entries comprises filtering the initial set of suggested entries based on the detected change.

In another aspect, the updated set of suggested entries comprises at least one entry having a combination of recipient identifiers retrieved from a previous message, where at least one recipient identifier of the combination of recipient identifiers matches the changed partial recipient identifier.

In a further aspect, the recipient identifier entry field comprises a previously-selected recipient identifier, and the previous message specifies the previously-selected recipient as a sender or recipient.

Still further, presenting the initial set of suggested entries may comprise: locating, in at least one data store of the electronic device, one or more sent messages addressed to a recipient identifier matching the partial recipient identifier, and for each located message addressed to multiple recipient identifiers, obtaining the multiple recipient identifiers and presenting the multiple recipient identifiers as a combination of recipient identifiers in a single entry.

In yet another aspect, the recipient identifier entry field is a Cc: or a Bcc: field of the message composition screen.

In still another aspect, the message composition screen includes a To: recipient identifier entry field comprising a previously-selected recipient identifier, and the initial set of suggested entries comprises at least one entry having a combination of recipient identifiers specified in a previous message where the previously-selected recipient identifier is a direct addressee of the previous message.

In a further aspect, the message composition screen includes a subject line entry field comprising entered subject line content, and the initial set of suggested entries matches both the partial recipient identifier and the entered subject line content.

Still further the method may comprise: detecting selection of one of the updated set of suggested entries; in response to detecting the selection, inserting the one or more recipient identifiers of the selected entry in the recipient identifier entry field; and when the recipient identifier entry field is in focus, presenting a further set of suggested entries for the recipient identifier entry field, the further set comprising at least one recipient identifier specified in a previous message in which the selected one or more recipient identifier are also specified. The method may further comprise: while the further set of suggested entries is displayed, detecting input of a further partial recipient identifier in the recipient identifier entry field; and in response to detecting the input of the further partial recipient identifier, presenting still a further set of suggested entries matching the further partial recipient identifier.

There is also provided an electronic device, which may comprise at least one input subsystem; a display; and at least one processor in communication with the at least one input subsystem and display, the electronic device, for example through its processor, being capable of implementing the methods and variants described herein.

There is also provided a computer-readable medium, which may be physical or non-transitory, bearing code which, when executed by one or more processors of an electronic device, causes the electronic device to implement the any one of the methods and variants described herein.

It should be understood that steps and the order of the steps in the processing described herein may be altered, modified and/or augmented and still achieve the desired outcome. Throughout the specification, terms such as "may" and "can" are used interchangeably and use of any particular term should not be construed as limiting the scope or requiring experimentation to implement the claimed subject matter or embodiments described herein. Further, unless stated otherwise, the various features and adaptations described in respect of one example or embodiment in this disclosure can be used with other examples or embodiments described herein, as would be understood by the person skilled in the art.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. Various functional units described herein have been expressly or implicitly described as modules and agents, in order to more particularly emphasize their independent implementation and operation. It is also noted that an agent, module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code. The various functional units may be implemented in hardware circuits such as custom VLSI circuits or gate arrays; field-programmable gate arrays; programmable array logic; programmable logic devices; commercially available logic chips, transistors, and other such components. Modules implemented as software for execution by a processor or processors may comprise one or more physical or logical blocks of code that may be organized as one or more of objects, procedures, or functions. The modules need not be physically located together, but may comprise code stored in different locations, such as over several memory devices, capable of being logically joined for execution. Modules may also be implemented as combinations of software and hardware, such as a processor operating on a set of operational data or instructions.

A portion of the disclosure of this patent document contains material which is or may be subject to one or more of copyright, design patent, industrial design, or unregistered design protection. The rights holder has no objection to the reproduction of any such material as portrayed herein through facsimile reproduction of the patent document or patent disclosure, as it appears in the Patent and Trademark Office patent file or records, but otherwise reserves all rights whatsoever.

## Claims

1. A method implemented at an electronic device (100), the method comprising:
detecting input of a partial recipient identifier (314) in a recipient identifier entry field (310, 320) of a message composition screen (300a) displayed at the electronic device (100); in response to detecting the input, presenting an initial set of suggested entries (362, 364, 366, 368) matching the partial recipient identifier (314) for selection for the recipient identifier entry field (310, 320), the initial set (362, 364, 366, 368) comprising at least one entry (364) having a combination of recipient identifiers (372, 374) specified in a previous message, where at least one recipient identifier of the combination of recipient identifiers matches the partial recipient identifier (314), wherein presenting the initial set of suggested entries (362, 364, 366, 368) comprises:
locating, in at least one data store of the electronic device (100), one or more sent messages addressed to a recipient identifier matching the partial recipient identifier (314), and
for each located message addressed to multiple recipient identifiers, obtaining the multiple recipient identifiers (372, 274) and presenting the multiple recipient identifiers as a combination of recipient identifiers in a single entry (364);
while the initial set of suggested entries (362, 364, 366, 368) is displayed, detecting a change to the partial recipient identifier (314) in the recipient identifier entry field (310, 320); and
in response to detecting the change, updating the initial set of suggested entries (362, 364, 366, 368) and presenting the updated set of suggested entries in place of the initial plurality of suggested entries (362, 364, 366, 368).

2. The method of claim 1, wherein updating the initial set of suggested entries (362, 364, 366, 368) comprises filtering the initial set of suggested entries (362, 364, 366, 368) based on the detected change.

3. The method of either claim 1 or 2, wherein the updated set of suggested entries (520) comprises at least one entry (532, 534) having a combination of recipient identifiers retrieved from a previous message, where at least one recipient identifier of the combination of recipient identifiers matches the changed partial recipient identifier.

4. The method of any one of claims 1 to 3, wherein the recipient identifier entry field (310, 320) comprises a previously-selected recipient identifier, and the previous message specifies the previously-selected recipient as a sender or recipient.

5. The method of any one of claims 1 to 4, wherein the recipient identifier entry field (310, 320) is a Cc: or a Bcc: field (320) of the message composition screen (300a).

6. The method of claim 5, wherein the message composition screen (300a) includes a To: recipient identifier entry field (310) comprising a previously-selected recipient identifier, and the initial set of suggested entries (354) comprises at least one entry having a combination of recipient identifiers (372, 374) specified in a previous message where the previously-selected recipient identifier is a direct addressee of the previous message.

7. The method of claim 1, wherein the message composition screen (300a) includes a subject line entry field (330) comprising entered subject line content, and the initial set of suggested entries (314) matches both the partial recipient identifier and the entered subject line content.

8. The method of claim 1, further comprising:
detecting selection of one (382) of the updated set of suggested entries;
in response to detecting the selection, inserting the one or more recipient identifiers of the selected entry in the recipient identifier entry field (310, 320); and
when the recipient identifier entry field (310, 320) is in focus, presenting a further set of suggested entries (520) for the recipient identifier entry field (310, 320), the further set (520) comprising at least one recipient identifier (532, 534) specified in a previous message in which the selected one or more recipient identifiers are also specified.

9. The method of claim 8, further comprising:
while the further set of suggested entries is displayed, detecting input of a further partial recipient identifier (514) in the recipient identifier entry field (310); and
in response to detecting the input of the further partial recipient identifier (514), presenting still a further set of suggested entries (520) matching the further partial recipient identifier (514).

10. An electronic device (100) adapted to implement all the steps of the method of any one of claims 1 to 9.

11. A computer-readable medium bearing code which, when executed by one or more processors (102) of an electronic device (100), causes the electronic device to implement all the steps of the method of any one of claims 1 to 9.

## Patentansprüche

1. Verfahren, das in einer elektronischen Vorrichtung (100) implementiert ist, wobei das Verfahren aufweist:
Erfassen einer Eingabe eines Teil-Empfänger-Identifizierers (314) in einem Empfänger-Identifizierer-Eingabefeld (310, 320) eines Nachrichterstellungsbildschirms (300a), der an der elektronischen Vorrichtung (100) angezeigt wird;
in Reaktion auf das Erfassen der Eingabe, Präsentieren eines anfänglichen Satzes von vorgeschlagenen Einträgen (362, 364, 366, 368), die dem Teil-Empfänger-Identifizierer (314) entsprechen, zur Auswahl für das Empfänger-Identifizierer-Eingabefeld (310, 320), wobei der anfängliche Satz (362, 364, 366, 368) zumindest einen Eintrag (364) mit einer Kombination von Empfänger-Identifizierern (372, 374) aufweist, die in einer vorherigen Nachricht spezifiziert werden, wobei zumindest ein Empfänger-Identifizierer der Kombination von Empfänger-Identifizierern dem Teil-Empfänger-Identifizierer (314) entspricht, wobei das Präsentieren des anfänglichen Satzes von vorgeschlagenen Einträgen (362, 364, 366, 368) aufweist:
Lokalisieren, in zumindest einem Datenspeicher der elektronischen Vorrichtung (100), einer oder mehrerer gesendeter Nachrichten, die an einen Empfänger-Identifizierer adressiert sind, der dem Teil-Empfänger-Identifizierer (314) entspricht, und
für jede lokalisierte Nachricht, die an mehrere Empfänger-Identifizierer adressiert ist, Erlangen der mehreren Empfänger-Identifizierer (372, 274) und Präsentieren der mehreren Empfänger-Identifizierer als eine Kombination von Empfänger-Identifizierern in einem einzelnen Eintrag (364);
während der anfängliche Satz von vorgeschlagenen Einträgen (362, 364, 366, 368) angezeigt wird, Erfassen einer Änderung des Teil-Empfänger-Identifizierers (314) in dem Empfänger-Identifizierer-Eingabefeld (310, 320); und
in Reaktion auf das Erfassen der Änderung, Aktualisieren des anfänglichen Satzes von vorgeschlagenen Einträgen (362, 364, 366, 368) und Präsentieren des aktualisierten Satzes von vorgeschlagenen Einträgen anstelle der anfänglichen Vielzahl von vorgeschlagenen Einträgen (362, 364, 366, 368).

2. Das Verfahren gemäß Anspruch 1, wobei das Aktualisieren des anfänglichen Satzes von vorgeschlagenen Einträgen (362, 364, 366, 368) ein Filtern des anfänglichen Satzes von vorgeschlagenen Einträgen (362, 364, 366, 368) basierend auf der erfassten Änderung aufweist.

3. Das Verfahren gemäß Anspruch 1 oder 2, wobei der aktualisierte Satz von vorgeschlagenen Einträgen (520) zumindest einen Eintrag (532, 534) mit einer Kombination von Empfänger-Identifizierern aufweist, die aus einer vorherigen Nachricht abgerufen werden, wobei zumindest ein Empfänger-Identifizierer der Kombination von Empfänger-Identifizierern dem geänderten Teil-Empfänger-Identifizierer entspricht.

4. Das Verfahren gemäß einem der Ansprüche 1 bis 3, wobei das Empfänger-Identifizierer-Eingabefeld (310, 320) einen zuvor ausgewählten Empfänger-Identifizierer aufweist und die vorherige Nachricht den zuvor ausgewählten Empfänger als einen Sender oder Empfänger spezifiziert.

5. Das Verfahren gemäß einem der Ansprüche 1 bis 4, wobei das Empfänger-Identifizierer-Eingabefeld (310, 320) ein Cc:- oder ein Bcc:-Feld (320) des Nachrichterstellungsbildschirms (300a) ist.

6. Das Verfahren gemäß Anspruch 5, wobei der Nachrichterstellungsbildschirm (300a) ein An:-Empfänger-Identifizierer-Eingabefeld (310) umfasst, das einen zuvor ausgewählten Empfänger-Identifizierer aufweist, und der anfängliche Satz von vorgeschlagenen Einträgen (354) zumindest einen Eintrag mit einer Kombination von Empfänger-Identifizierern (372, 374) aufweist, die in einer vorherigen Nachricht spezifiziert werden, wobei der zuvor ausgewählte Empfänger-Identifizierer ein direkter Adressat der vorherigen Nachricht ist.

7. Das Verfahren gemäß Anspruch 1, wobei der Nachrichterstellungsbildschirm (300a) ein Betreffzeile-Eingabefeld (330) umfasst, das einen eingegebenen Betreffzeile-Inhalt aufweist, und der anfängliche Satz von vorgeschlagenen Einträgen (314) sowohl dem Teil-Empfänger-Identifizierer als auch dem eingegebenen Betreffzeile-Inhalt entspricht.

8. Das Verfahren gemäß Anspruch 1, das weiter aufweist:
Erfassen einer Auswahl von einem (382) des aktualisierten Satzes von vorgeschlagenen Einträgen;
in Reaktion auf das Erfassen der Auswahl, Einfügen des einen oder der mehreren Empfänger-Identifizierer(s) des ausgewählten Eintrags in das Empfänger-Identifizierer-Eingabefeld (310, 320); und
wenn das Empfänger-Identifizierer-Eingabefeld (310, 320) im Fokus ist, Präsentieren eines weiteren Satzes von vorgeschlagenen Einträgen (520) für das Empfänger-Identifizierer-Eingabefeld (310, 320), wobei der weitere Satz (520) zumindest einen Empfänger-Identifizierer (532, 534) aufweist, der in einer vorherigen Nachricht spezifiziert wird, in der der ausgewählte eine oder mehrere Empfänger-Identifizierer ebenfalls spezifiziert wird/werden.

9. Das Verfahren gemäß Anspruch 8, das weiter aufweist:
während der weitere Satz von vorgeschlagenen Einträgen angezeigt wird, Erfassen einer Eingabe eines weiteren Teil-Empfänger-Identifizierers (514) in dem Empfänger-Identifizierer-Eingabefeld (310); und
in Reaktion auf das Erfassen der Eingabe des weiteren Teil-Empfänger-Identifizierers (514), Präsentieren eines weiteren Satzes von vorgeschlagenen Einträgen (520) entsprechend dem weiteren Teil-Empfänger-Identifizierer (514).

10. Eine elektronische Vorrichtung (100), die ausgebildet ist zum Implementieren aller Schritte des Verfahrens gemäß einem der Ansprüche 1 bis 9.

11. Ein computerlesbares Medium mit Code, der bei Ausführung durch einen oder mehrere Prozessor(en) (102) einer elektronischen Vorrichtung (100) die elektronische Vorrichtung veranlasst zum Implementieren aller Schritte des Verfahrens gemäß einem der Ansprüche 1 bis 9.

## Revendications

1. Procédé mis en oeuvre au niveau d'un dispositif électronique (100), le procédé comprenant le fait :
de détecter une saisie d'un identifiant de destinataire partiel (314) dans un champ d'entrée d'identifiant de destinataire (310, 320) d'un écran de composition de message (300a) affiché sur le dispositif électronique (100) ; de présenter, en réponse à la détection de la saisie, un ensemble initial d'entrées suggérées (362, 364, 366, 368) correspondant à l'identifiant de destinataire partiel (314) pour la sélection du champ d'entrée d'identifiant de destinataire (310, 320), l'ensemble initial (362, 364, 366, 368) comprenant au moins une entrée (364) ayant une combinaison d'identifiants de destinataire (372, 374) spécifiés dans un message précédent, où au moins un identifiant de destinataire de la combinaison d'identifiants de destinataire correspond à l'identifiant du destinataire partiel (314), où la présentation de l'ensemble initial d'entrées suggérées (362, 364, 366, 368) comprend le fait :
de localiser, dans au moins une mémoire de données du dispositif électronique (100), un ou plusieurs message(s) envoyé(s) adressé(s) à un identifiant de destinataire correspondant à l'identifiant de destinataire partiel (314), et
d'obtenir, pour chaque message localisé adressé à des identifiants de destinataire multiples, les identifiants de destinataire multiples (372, 274) et de présenter les identifiants de destinataire multiples comme une combinaison d'identifiants de destinataire en une seule entrée (364) ;
de détecter, pendant que l'ensemble initial d'entrées suggérées (362, 364, 366, 368) est affiché, une modification de l'identifiant de destinataire partiel (314) dans le champ d'entrée d'identifiant de destinataire (310, 320) ; et
de mettre à jour l'ensemble initial d'entrées suggérées (362, 364, 366, 368) et de présenter l'ensemble mis à jour d'entrées suggérées à la place de la pluralité initiale d'entrées suggérées (362, 364, 366, 368) en réponse à la détection de la modification.

2. Procédé de la revendication 1, dans lequel la mise à jour de l'ensemble initial d'entrées suggérées (362, 364, 366, 368) comprend le fait de filtrer l'ensemble initial d'entrées suggérées (362, 364, 366, 368) sur la base de la modification détectée.

3. Procédé de l'une ou l'autre des revendications 1 et 2, dans lequel l'ensemble mis à jour d'entrées suggérées (520) comprend au moins une entrée (532, 534) ayant une combinaison d'identifiants de destinataire extraits d'un message précédent, où au moins un identifiant de destinataire de la combinaison d'identifiants de destinataire correspond à l'identifiant de destinataire partiel modifié.

4. Procédé de l'une quelconque des revendications 1 à 3, dans lequel le champ d'entrée d'identifiant de destinataire (310, 320) comprend un identifiant de destinataire précédemment sélectionné, et le message précédent spécifie le destinataire précédemment sélectionné en tant que expéditeur ou destinataire.

5. Procédé de l'une quelconque des revendications 1 à 4, dans lequel le champ d'entrée d'identifiant de destinataire (310, 320) est un champ Ce : ou Cci : (320) de l'écran de composition de message (300a).

6. Procédé de la revendication 5, dans lequel l'écran de composition de message (300a) comporte un champ d'entrée d'identifiant de destinataire (310) À : comprenant un identifiant de destinataire précédemment sélectionné, et l'ensemble initial d'entrées suggérées (354) comprend au moins une entrée ayant une combinaison d'identifiants de destinataire (372, 374) spécifiés dans un message précédent, où l'identifiant de destinataire précédemment sélectionné est un destinataire direct du message précédent.

7. Procédé de la revendication 1, dans lequel l'écran de composition de message (300a) comporte un champ d'entrée de ligne objet (330) comprenant un contenu de ligne objet entré, et l'ensemble initial d'entrées suggérées (314) correspond à la fois à l'identifiant de destinataire partiel et au contenu de ligne objet entré.

8. Procédé de la revendication 1, comprenant en outre le fait :
de détecter une sélection de l'une (382) de l'ensemble mis à jour d'entrées suggérées ;
d'insérer, en réponse à la détection de la sélection, le ou les plusieurs identifiant(s) de destinataire de l'entrée sélectionnée dans le champ d'entrée d'identifiant de destinataire (310, 320) ; et
de présenter, lorsque le champ d'entrée d'identifiant de destinataire (310, 320) est ciblé, un autre ensemble d'entrées suggérées (520) pour le champ d'entrée d'identifiant de destinataire (310, 320), l'autre ensemble (520) comprenant au moins un identifiant de destinataire (532, 534) spécifié dans un message précédent dans lequel le ou les plusieurs identifiant (s) de destinataire sélectionné(s) est/sont également spécifié(s).

9. Procédé de la revendication 8, comprenant en outre le fait :
de détecter, pendant que l'autre ensemble d'entrées suggérées est affiché, une saisie d'un autre identifiant de destinataire partiel (514) dans le champ d'entrée d'identifiant de destinataire (310) ; et
de présenter, en réponse à la détection de la saisie de l'autre identifiant de destinataire partiel (514), encore un autre ensemble d'entrées suggérées (520) correspondant à l'autre identifiant de destinataire partiel (514) .

10. Dispositif électronique (100) adapté pour mettre en oeuvre toutes les étapes du procédé de l'une quelconque des revendications 1 à 9.

11. Support lisible par ordinateur doté d'un code qui, lorsqu'il est exécuté par un ou plusieurs processeur(s) (102) d'un dispositif électronique (100), amène le dispositif électronique à mettre en oeuvre toutes les étapes du procédé de l'une quelconque des revendications 1 à 9.
